# EUROPEAN PATENT APPLICATION

(11) **EP 0 627 567 A1**
(43) Date of publication of application: **07.12.1994**
(21) Application number: 94303776.2
(22) Date of filing: 25.05.1994
(51) Int. Cl.: F16B 13/06

(54) **Anchor bolt**

(30) Priority: 04.06.1993 GB 9311578
(71) Applicant: EMHART INC., Newark, Delaware 19711 (US)
(72) Inventor: Lafferty, Hugh, Argyll, Scotland PA22 3AP (GB)
(74) Representative: Randall, John Walter

(57) **Abstract**

A sleeve (24) for an anchor bolt is formed from a blank (2) comprising a cylindrical collar (4) having a number of segments (8) extending radially outwards and bending the segments (8) inwardly to form a sleeve (24) in which the segments lie generally cylindrically about the axis of the collar (4).

## Description

This invention relates to anchor bolts and in particular to a method of manufacturing such and or bolts and parts therefor.

Anchor bolts are used for providing fixings in concrete and similar materials. An anchor bolt usually comprises a sleeve assembly, generally of overall tubular form, which is located on a setting member in the form of a bolt comprising an expander head which may be integral or in the form of a nut. The anchor bolt is located in a hole in a concrete and the like, with the sleeve and the expander head in the hole, and the bolt is then drawn into the sleeve, often by tightening a nut which bears onto the surface of the concrete, and the expander head thus causes the sleeve to expand outwards against the surface of the hole, thus to secure the anchor bolt in the hole.

Anchor bolts are designed to provide anchorages of different strengths. A light duty anchor bolt may comprise a sleeve of comparatively thin sheet metal, which can be formed into a tube (possibly with an axial slit), around the bolt. In a heavy duty anchor bolt however the sleeve is more substantial, and typically is made up of a number of cast segments, which are held in position on the bolt by a pressed cap and by a retaining ring located in a circumferential groove formed in the outer surface of the segments.

Thus the production of a typical heavy duty anchor bolt requires the separate forming of the cast segments, which may be three or more in number, and an end cap and the assembly of the segments, the end cap and the receiving ring on a bolt.

An attempt to simplify the manufacture of such an anchor bolt is described in European Patent Application No. 0 154 466 in the name of the Rawlplug Company Limited. This application describes an anchor bolt having a sleeve which is cast as a single component. A nut may also be incorporated in the casting and coupled to the sleeve by frangible portions which will fracture when force is applied to the nut to draw it into the sleeve. The sleeve is formed by sand or investment casting or some other process which utilises sacrificial or expanding cores. Unfortunately, the requirement for such sacrificial or expanding cores increases the complexity and expense of the forming process.

It is among the objects of the present invention to provide an improved method of forming a sleeve for a heavy duty anchor bolt.

According to the present invention there is provided a method of forming a sleeve for use in an anchor bolt comprising
forming a blank comprising a cylindrical collar having a plurality of segments extending radially outward therefrom and bending the segments inwardly to an assembly position in which they lie generally cylindrically around the axis of the collar to provide a sleeve.

This method allows a sleeve for an anchor bolt to be produced using a relatively straightforward process, while also reducing the degree of manual assembly involved in the production of the complete anchor bolt.

Preferably the blank formed by casting. It can be seen that the formation of the radially outwardly extending segments obviates the need for sacrificial or expanding cores so that, for example, a simple two part sand mould may be utilised. When formed by casting the blank is preferably cast from malleable iron. Alternatively, the blank may be pressed or forged, in which case it is preferably formed from mild steel.

Preferably each segment is joined to the end portion of the collar through a portion of reduced cross section. In this case, when the segments are bent inwardly, deformation occurs only at such reduced portions

In a larger size anchor bolt preferably six or more segments are provided: for smaller anchor bolts it may be more convenient to provide these segments only.

The segments may be provided with a circumferential groove to receive a ring which biases the segments radially inwardly.

The invention also provides a method of making an anchor bolt comprising the steps of assembling a sleeve formed as set out in the last paragraph but five, and positioning the sleeve on a setting member having a faceted head adapted to engage end portions of the segments

The invention also provides an anchor bolt when made by a method as set out in the last preceding paragraph.

There now follows a description, to be read with reference to the accompanying drawings, of a method of forming a sleeve for use in an anchor bolt, which method embodies the invention.

In the accompanying drawings
Figure 1 shows a plan view of a blank for use in forming a sleeve;
Figure 1A shows a cross section taken along A-A of Figure 1
Figure 2 shows a side view of the blank;
Figure 3 shows a perspective view of an anchor bolt;
Figure 4 shows a side view of the anchor bolt.

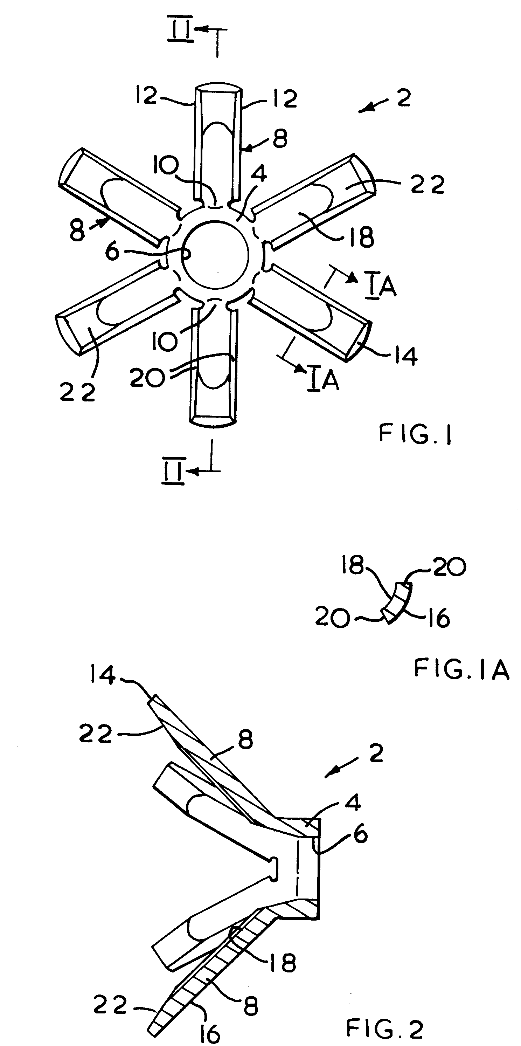

A blank 2 for forming a sleeve for use in an anchor bolt in shown in Figures 1 and 2. The blank 2 comprises a cylindrical collar 4. One end portion of the collar 4 has a cylindrical bore 6. From the other end portion a plurality (in particular six) segments 8 extend radially outwards. Each segment 8 comprises a reduced portion 10 by which it is joined to the end portion of the collar. Each segment 8 is generally rectangular in plan, having parallel sides 12, 12 and a flat end face 14. In the blank 2, the segments 8 are somewhat inclined to the axis of the collar 4; in cross section (see Figure 1A) each segment is generally of the shape of a sector of a circle, an outer face 16 of each segment being of a larger radius than an inner face 18, and side faces 20, 20 of the segment subtending an angle of about 59°. It can be seen that the thickness of each segment along a centre line thereof is approximately equal to the radial thickness of the collar 4. An inclined surface 22 extending from the end face 14 of each segment 8 provides a tapered end portion to the segment.

It can be seen that the blank 2 is of a shape which can easily be formed by a conventional casting process in a relatively simple two part mould, and it is made in this way from malleable iron GTW 40. Alternatively the blank may be made by forging or pressing from mild steel

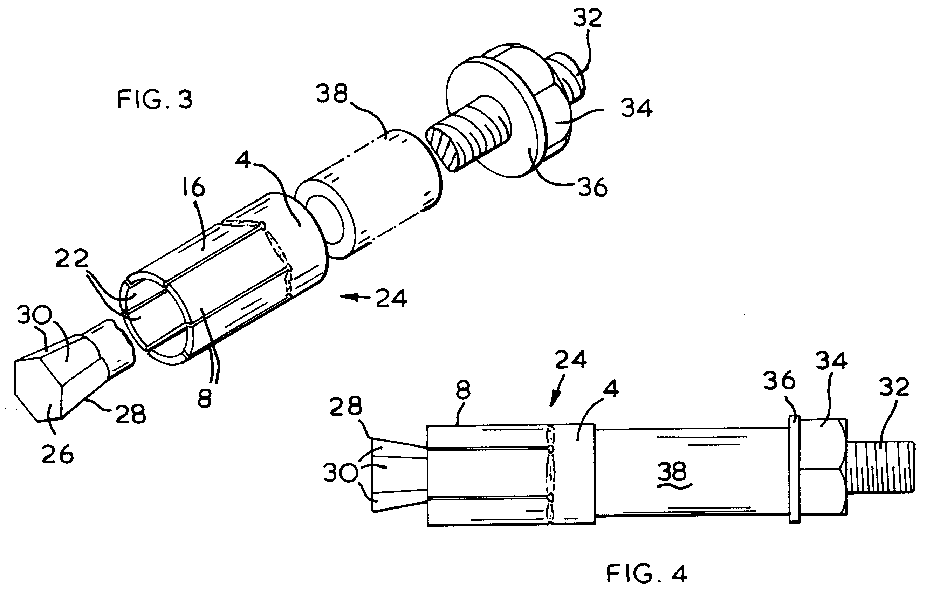

A sleeve 24 (Figures 3 & 4) is formed from the blank 2 by bending the segments 8 inwardly to an assembly position in which they lie generally cylindrically around the axis of the collar 4 to provide the sleeve 24. In the sleeve 24 the curved outer faces 16 of the segments 8 lie on a circle which is approximately equal in diameter to the outside diameter of the collar 4, that is to say they are approximately circular about the axis of the collar 4. The inclined surfaces 22 of each of the segments 8 provide a tapered inner surface to the end portion of each segment in the sleeve 24.

When making an anchor bolt 26 by use of the sleeve 24, the sleeve is positioned on a setting member 26, which is shown in the form of a bolt having a faceted head 28 which has six circumferentially arranged faces 30 which are adapted to engage the inclined surfaces 22 of the sleeve. The member 26 has a threaded end portion 32 on which is mounted a nut 34. A washer 36 is positioned on the member 26 next to the nut 34, and between the washer 36 and the collar 4 of the sleeve 24 is a further sleeve 38. It can be seen that on tightening the nut 34, the head 28 will be drawn into the sleeve 24 and will cause the segments 8 to expand.

If desired, a ring may be arranged around an end portion of the segments 8, but it is not normally needed.

## Claims

1. A method of forming a sleeve for use in an anchor bolt comprising
forming a blank comprising a cylindrical collar having
a plurality of segments extending radially outward from an end portion of the collar and bending the segments inwardly to an assembly position in which they lie generally cylindrically around the axis of the collar to provide a sleeve.

2. A method according to claim 1 wherein the blank is formed by casting.

3. A method according to claim 2 wherein the blank is cast from malleable iron.

4. A method according to claim 1 wherein the blank is formed by pressing or forging.

5. A method according to claim 4 wherein the blank is formed from mild steel.

6. A method according to any one of the preceding claims wherein each segment is joined to the end portion of the collar through a portion of the collar of reduced cross section.

7. A method according to any one of the preceding claims wherein the thickness of each segment along a centre line thereof is approximately equal to the radial thickness of the collar.

8. A method according to claim 7 wherein the outer surface of each segment when in its assembly position is rounded, approximately circular about the axis.

9. A method according to claim 8 wherein the end portion of each segment is tapered on its inner surface.

10. A method according to any one of the preceding wherein the blank comprises six segments.

11. A method of assembling an anchor bolt comprising the steps of assembling a sleeve formed according to any one of the preceding claims, and positioning the sleeve on a setting member having a faceted head adapted to engage end portions of the segments.

12. An anchor bolt made by a method according to claim 11.
